# EUROPEAN PATENT APPLICATION

(11) **EP 4 769 752 A1**
(43) Date of publication of application: **01.07.2026**
(21) Application number: 25807929.2
(22) Date of filing: 12.02.2025
(51) Int. Cl.: H01M 50/342, H01M 50/533, H01M 50/183, H01M 50/536, H01M 50/105

(54) **SECONDARY BATTERY**

(30) Priority: 24.05.2024 KR 20240067687
(71) Applicant: LG Energy Solution, Ltd., Seoul 07335 (KR)
(72) Inventor: LEE, Bumhee, Daejeon 34122 (KR)
(74) Representative: Goddar, Heinz J.
(86) International application number: PCT/KR2025/002031
(87) International publication number: WO 2025/244246

(57) **Abstract**

A secondary battery according to one embodiment of the present invention comprises: an electrode assembly; an electrode tab having one end electrically connected to at least one electrode in the electrode assembly; a battery case including an accommodation part for accommodating the electrode assembly and the electrode tab; and an electrode lead bonded to the other end of the electrode tab so as to protrude to the outside of the battery case, wherein the battery case further includes a space part which is connected to one end of the electrode lead and which is expanded by gas when the gas is generated inside the battery case, and the electrode tab can be broken by physical force transferred through the electrode lead when the space part is expanded by the gas to a predefined threshold level or more.

## Description

### [Technical Field]

This application claims priority to and the benefit of Korean Patent Application No.10-2024-0067687 filed in the Korean Intellectual Property Office on May 24, 2024 the entire contents of which are incorporated herein by reference.

The present invention relates toa secondary battery, and more particularly, to a secondary battery in which stability is improved by breaking an electrode tab when gas is generated inside the battery.

### [Background Art]

Secondary batteries, capable of recharging and reuse, may be used as an energy source for small devices such as mobile phones, tablet PCs and vacuum cleaners, and also used as an energy source for medium and large devices such as automobiles and an energy storage system (ESS) for smart grids.

One of the main research tasks of these secondary batteries is to improve safety.

In general, secondary batteries have a risk of explosion due to abnormal battery conditions such as internal short circuits, overcharge or overheating, and external impact.

In particular, secondary batteries used in medium and large battery packs as power sources for electric vehicles, hybrid vehicles, etc. require a long lifespan and are provided in large numbers of batteries, so securing safety is very important.

Thus, technological developments are required to prevent battery ignition or explosion in advance and improve the stability of secondary batteries.

### [Detailed Description of the Invention]

### [Technical Problem]

To obviate one or more problems of the related art, embodiments of the present disclosure provide a secondary battery with improved stability.

### [Technical Solution]

In order to achieve the objective of the present disclosure, a secondary battery may include an electrode assembly; an electrode tab electrically connected to at least one electrode in the electrode assembly; a battery case including a receiving region configured to receive the electrode assembly and the electrode tab; and an electrode lead that is joined to the electrode tab and protrudes outside the battery case, wherein the battery case further includes a space portion that is joined to at least a part of the electrode lead and that expands by gas which is generated inside the battery case, and wherein, upon the space portion expanding by the gas, the electrode tab becomes fractured by a physical force transmitted through the electrode lead.

Volume of the space portion may be provided in an asymmetrical shape that decreases as it goes down from a first side part to a second side part.

When the space portion is expanded by gas, gas expansion density is concentrated on the first side part of the space portion so that an external force is sequentially applied from one side of the electrode tab, which is close to the first side part of the space portion, to the other side, resulting in the electrode tab fractured in a diagonal direction.

The electrode tab may include a notch that guides fracture.

The battery case may include a folded region that is formed at one or more ends of the battery case and is provided in an asymmetrical shape with an area that decreases as it goes down from a first side part to a second side part, and the folded region may be provided such that at least a part of the folded region is folded and recessed into the receiving region in the initial state.

The at least a part of the folded region that has been folded and recessed expands outward when gas equal to or greater than a predetermined first threshold level is generated inside the battery case.

When gas greater than a second threshold level which is equal to or greater than the first threshold level is generated inside the battery case, the gas expansion density is concentrated on the first side part of the space portion so that external force is sequentially applied from one side of the electrode tab, which is close to the first side part of the space portion, to the other side, resulting in the electrode tab fractured in a diagonal direction.

The battery case may include a first case positioned below the electrode assembly; and a second case positioned above the electrode assembly and facing the first case.

The electrode lead, which is connected to the electrode tab, may be joined and sealed with ends of the first case and the second case.

The first case and the second case may include a sealing portion that seals outer peripheral surfaces of the first case and the second case.

The sealing portion may be configured to seal and bond at least one area of the first case, the second case, and the electrode lead, by at least one of heat and pressure.

The battery case may be provided as a pouch type case.

### [Advantageous Effects]

It is possible to reduce risk of battery explosion by fracturing a battery tab when internal gas exceeding a threshold level is generated in a battery case including a space portion having an asymmetrical shape according to embodiments of the present disclosure, thereby improving safety of secondary battery.

### [Brief Description of the Drawings]

FIG. 1 is an image of a secondary battery according to embodiments of the present invention.
FIG. 2 is an exploded perspective view of a secondary battery according to an embodiment of the present invention.
FIG. 3 is a cross-sectional view of the secondary battery cut along line B-B' in FIG. 2.
FIG. 4 is a perspective view of an electrode assembly according to embodiments of the present invention.
FIG. 5 is a conceptual diagram for explaining fractured state of an electrode tab over time according to embodiments of the present invention.
FIG. 6 is a partial image of a secondary battery according to embodiments of the present invention, which is an enlarged view of area A of FIG. 1.
FIG. 7 is an exploded perspective view of a secondary battery according to another embodiment of the present invention.
FIG. 8 is a perspective view of a secondary battery in an initial state according to another embodiment of the present invention.
FIG. 9 is a partial image of a secondary battery according to another embodiment of the present invention, which corresponds to an enlarged view of area A of FIG. 1.
   - 100:: battery case
   - 200:: electrode assembly

   - 110:: first case
   - 120:: second case

   - 310:: electrode tab
   - 320:: electrode lead

   - 400:: receiving region
   - 500:: sealing portion

   - 600:: space portion

### [Best Modes for Practicing the Disclosure]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, A, B, and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

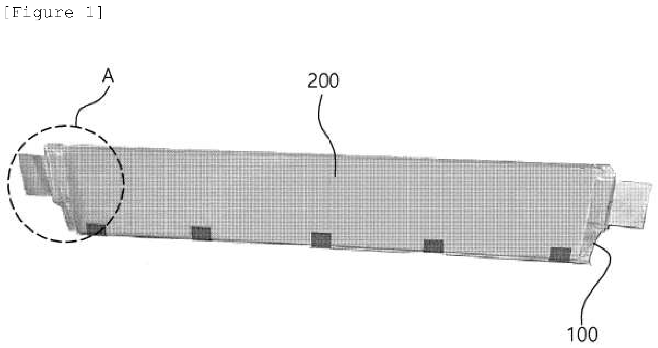

FIG. 1 is an image of a secondary battery according to embodiments of the present invention.

The secondary battery according to embodiments of the present invention may include a battery case 100 and an electrode assembly 200.

The battery case 100 may include an electrode assembly 200. According to an embodiment, the battery case 100 may be provided in a sealed form with a first case and a second case facing each other with the electrode assembly 200 interposed therebetween.

In addition, the battery case 100 may further include an electrolyte solution. Here, the battery case 100 may further include an injection port for injecting electrolyte solution into sealed interior of the first case and the second case.

The electrode assembly 200 may include a first electrode, a second electrode, and a separator. Here, the first electrode may correspond to a positive electrode and the second electrode may correspond to a negative electrode.

Meanwhile, the first electrode and the second electrode may have a coated portion coated with active material and a non-coated portion which is not coated with active material, respectively. In the present invention, the active material of the first electrode and the active material of the second electrode are not limited to specific chemicals.

The electrode assembly 200 may be provided in a structure in which the first electrode and the second electrode are laminated with a separator in between. In other words, the electrode assembly 100 may be provided in a stacked or stacked/folded structure in which the first electrode, the second electrode, and the separator that are manufactured to certain dimensions are sequentially laminated. However, without being limited to what has been disclosed, the electrode assembly 200 may also be provided in a rolled structure in which the first electrode, the second electrode, and the separator manufactured to a certain dimension are sequentially laminated and then rolled up.

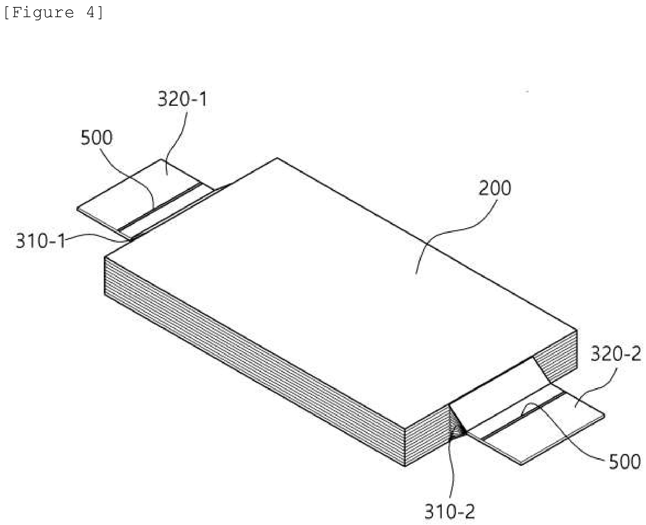

One or more electrode terminals electrically connected to the electrode assembly 200 may be provided on the outer surface of the battery case 100. Here, the electrode terminal may include a first electrode terminal connected to the first electrode, and a second electrode terminal connected to the second electrode. The first electrode terminal and the second electrode terminal will be described in more detail in FIG. 4 below.

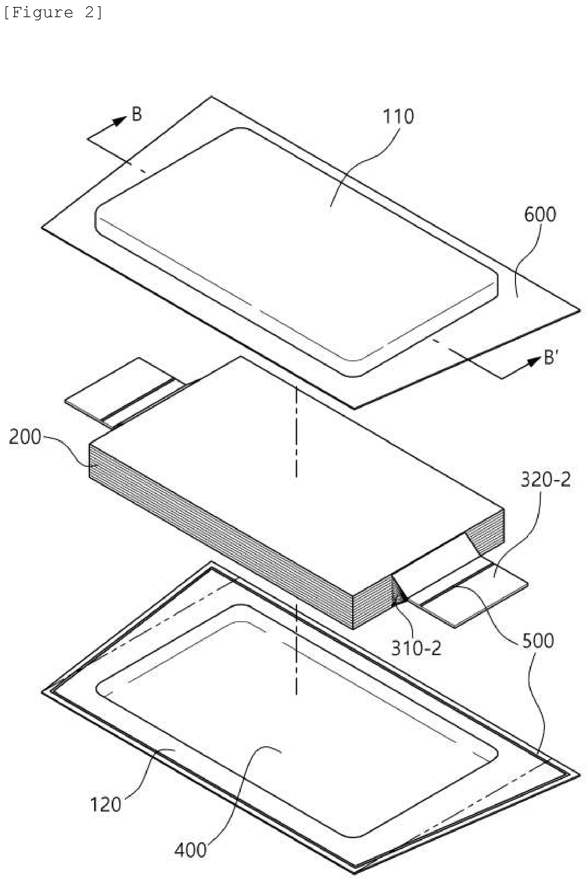

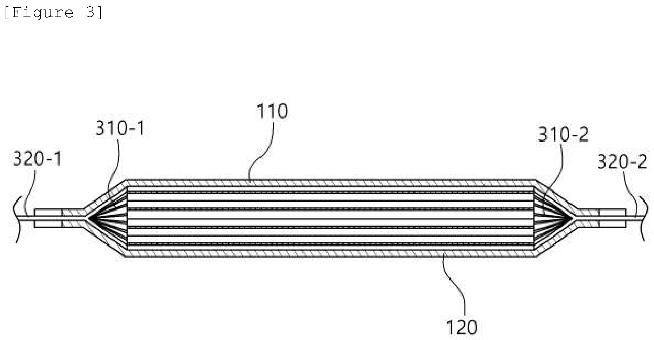

FIG. 2 is an exploded perspective view of a secondary battery according to an embodiment of the present invention and FIG. 3 is a cross-sectional view of the secondary battery cut along line B-B' in FIG. 2.

Referring to FIGS. 2 and 3, the battery case 100 may be provided as a thin film formed of a flexible material. For example, the battery case 100 may be manufactured to enable a certain level of shape deformation by being formed as a laminate sheet in which a resin layer and a metal layer (e.g., an aluminum sheet) are laminated and bonded.

According to an embodiment, the battery case 100 may include a first case 110 and a second case 120. Here, the first case 110 and the second case 120 may be provided in the same shape. For example, the first case 110 and the second case 120 may be provided as a thin film having a trapezoidal shape.

More specifically, the first case 110 may be placed above the electrode assembly 200.

In addition, the second case 120 may be placed below the electrode assembly 200 to correspond to the first case 110.

The first case 110 may include a receiving region 400 for receiving the electrode assembly 200 and electrolyte. In addition, the first case 110 may further include a sealing portion 500 formed along the outer perimeter.

Here, the sealing portion 500 may be a configuration for sealing the electrode assembly 200 located between the first case 110 and the second case 120, and the electrolyte. For example, the first case 110 may be thermally fused with the second case 120 forming a sealed bond, by heat and pressure applied to the sealing portion 500. Accordingly, the electrolyte located inside the receiving region400 maybe prevented from leaking to the outside of the battery case 100. However, without being limited to what has been disclosed, the sealing portion 500 maybe additionally formed along the outer periphery surface of the receiving region 400 as well as the outer perimeter of the battery case.

Meanwhile, according to another embodiment, the battery case 100 may be provided as a single thin film.

In more detail, the battery case 100 may be provided as folded so that the first region is arranged at the top and the second region is arranged at the bottom based on a horizontal line passing through the center point. In other words, the battery case 100 may be provided in a folded "" shape, such that the electrode assembly 200, the first and second electrode tabs 310-1 and 310-2, and a portion of the first and second electrode leads 320-1 and 320-2 are wrapped between the first region and the second region based on the horizontal line. Here, the electrode tabs 310-1 and 310-2 and the electrode leads 320-1 and 320-2 may be provided as a single configuration combined into one. For example, the first electrode tab 310-1 and the first electrode lead 320-1 may be provided in the form of a first lead tab, and the second electrode tab 310-2 and the second electrode lead 320-2 may be provided in the form of a second lead tab. Thereafter, the battery case 100 may be provided such that open side portions are sealed by the sealing portion 500.

FIG. 4 is a perspective view of an electrode assembly according to embodiments of the present invention.

Referring to FIG. 4, the electrode assembly 200 may have a stacked structure in which a first electrode, a second electrode, and a separator manufactured in the same shape and having predetermined dimension are sequentially stacked.

The electrode assembly 200 may be connected to a first electrode terminal and a second electrode terminal formed at each end for electrical connection with an external device.

The first electrode terminal may include a first electrode tab 310-1 and a first electrode lead 320-1. Here, one side of the first electrode tabs 310-1 may be electrically connected to the first electrode lead 320-1, and the other side of the first electrode tabs 310-1 may be electrically connected to each of the first electrode layers of the electrode assembly 200. According to an embodiment, the first electrode lead320-1 may be welded and joined with the first electrode tabs 310-1.

The second electrode terminal may include a second electrode tab 310-2 and a second electrode lead 320-2. Here, one side of the second electrode tabs 310-2 may be electrically connected to each of the second electrode layers, and the other side of the second electrode tabs 310-2 may be electrically connected to the second electrode lead 320-2. Accordingly, the second electrode lead 320-2 may be welded and joined with the second electrode tabs 310-2 and may extend from the other end of the second electrode tabs 310-2.

Meanwhile, the first electrode tabs 310-1 and the second electrode tabs 310-2 may be provided as a metal thin film having a predetermined thickness. According to an embodiment, the first electrode tab 310-1 and the second electrode tab 310-2 may be provided as a metal foil in micrometer (µm) units. Accordingly, the first electrode tab 310-1 and the second electrode tab 310-2 may be cut in a diagonal direction by a physical force when a space portion 600 in the battery case 100, which will be described later, expands.

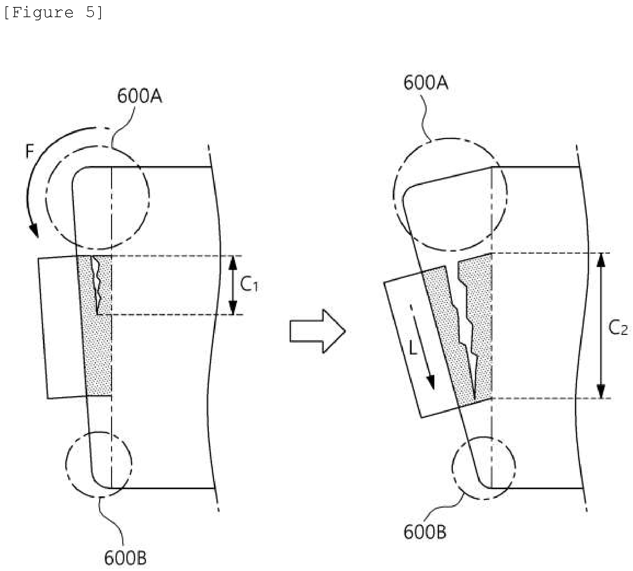

FIG. 5 is a conceptual diagram for explaining fractured state of an electrode tab over time according to embodiments of the present invention.

Referring to FIG. 5, the battery case 100 may accommodate the electrode assembly 200 in a sealed state as described above.

In general, gas may be generated inside the secondary battery due to a chemical reaction caused by charging and discharging of the battery. Accordingly, a space portion 600 may be formed inside the battery case 100.

The space portion 600 may be formed in at least one end of the battery case 100. Here, the space portion 600 may include a first space portion 600A formed on a first side part and a second space portion 600B formed on a second side part.

One of the first space portion 600A and the second space portion 600B, the first space portion 600A, may have a relatively larger volume than the other one, the second space portion 600B. In other words, the first space portion 600A and the second space portion 600B may be provided in asymmetrical sizes.

Accordingly, when gas is generated from the electrode assembly 200, a large amount of gas may exist in the first space portion 600A compared to the second space portion 600B. In other words, gas expansion density of the first space portion 600A may be greater than the gas expansion density of the second space portion 600B. Thus, a rotational force F may be applied to the first space portion 600A in a counterclockwise direction.

Here, when the rotational force F becomes greater than tension of at least one electrode tab 310-1, 310-2, at least one electrode tab 310-1, 310-2 may be sequentially (C1→C2) fractured in a diagonal direction L from the first side part toward the second side part.

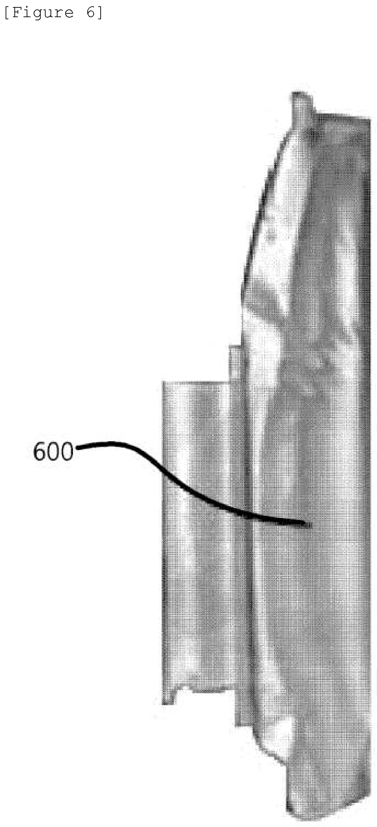

The shapes of the battery cases according to the embodiments of the present invention will be described in more detail in the following FIGS. 6 to 9.

FIG. 6 is a partial image of a secondary battery according to embodiments of the present invention, which is an enlarged view of area A of FIG. 1.

Referring to FIG. 2, FIG. 5, and FIG. 6, a battery case 100 according to embodiments of the present invention may include a first case 110 and a second case 120 whose cross-sections are asymmetrical from top to bottom based on the long axis. In other words, the sizes of the cross-sections of the first case 110 and the second case 120 may gradually increase or decrease from one side to the other. For example, the cross-sections of the first case 100 and the second case 120 may be provided in a trapezoidal shape.

The first case 110 and the second case 120 may be sealed by forming a sealing portion 500 on the outer perimeter, with at least one electrode tab 310-1, 310-2 interposed therebetween.

Thereafter, as shown in FIG. 6, when gas is generated inside the secondary battery, an asymmetrical space portion 600 may be formed at one or more ends of the battery case 100 due to expansion of the gas.

Here, the space portion 600 is provided with asymmetrical volume, so that the gas density may be relatively concentrated on the first space portion 600A on the first side part compared to the second space portion 600B on the second side part. Thus, an external force (F) may be generated on the first space portion 600A on the first side part. Accordingly, a rotational force (F) may also be applied to at least one of electrode tab 310-1, 310-2 that is fixed together by sealing.

Here, if the gas expansion density exceeds a predetermined threshold level, at least one of the first electrode tab 310-1 and the second electrode tab 310-2 may be fractured in a diagonal direction from the first space portion 600A on the first side part to the second space portion 600B on the second side part. Here, the predetermined threshold level may be a gas density immediately before a vent occurs. For example, the predetermined threshold level may be calculated in advance by considering expansion force of the space portion 600, tension of the electrode tabs 310-1 and the electrode leads 310-2, and bonding force of the sealing portion 500, etc.

In more detail according to one embodiment, when the space portion 600 is located at one end of the battery case 100, a rotational force F may be generated in a counterclockwise direction at the first space portion 600A on the first side part of the one end. Accordingly, as the first electrode lead 320-1 moves in a counterclockwise direction while receiving a rotational force F, the rotational force F may be applied in the same direction (counterclockwise) to the first electrode tab 310-1 connected to the first electrode lead 320-1.

Here, since the first electrode tab 310-1 is provided as a micrometer metal thin film, when the gas expansion density exceeds a predetermined threshold level, a force greater than the tension of the first electrode tab 310-1 may be sequentially applied from the first side part 600A to the second side part 600B of the first electrode tab 310-1. Accordingly, the first electrode tab 310-1 may be sequentially (C1→C2) broken in the first diagonal direction(L).

Meanwhile, according to another embodiment, when the space portion 600 is located at the other end of the battery case 100, a rotational force F may be generated in a clockwise direction at the first space portion 600A on the first side part of the other end. Accordingly, when the second electrode lead 320-2 moves by receiving the rotational force F in the clockwise direction, a rotational force F may be applied in the same direction (clockwise direction) to the second electrode tab 310-2 connected to the second electrode lead 320-2.

Here, since the second electrode tab 310-2 is provided as a micrometer metal thin film, when the gas expansion density exceeds a predetermined threshold level, a force greater than the tension of the second electrode tab 310-2 may be sequentially applied from the first side part 600A of the second electrode tab 310-2 to the second side part 600B. Accordingly, the second electrode tab 310-2 may be sequentially broken in a second diagonal direction. Here, the second diagonal direction may be opposite to the direction of the first electrode tab 310-1. For example, the first diagonal line may be directed downward to the right and the second diagonal line may be directed downward to the left.

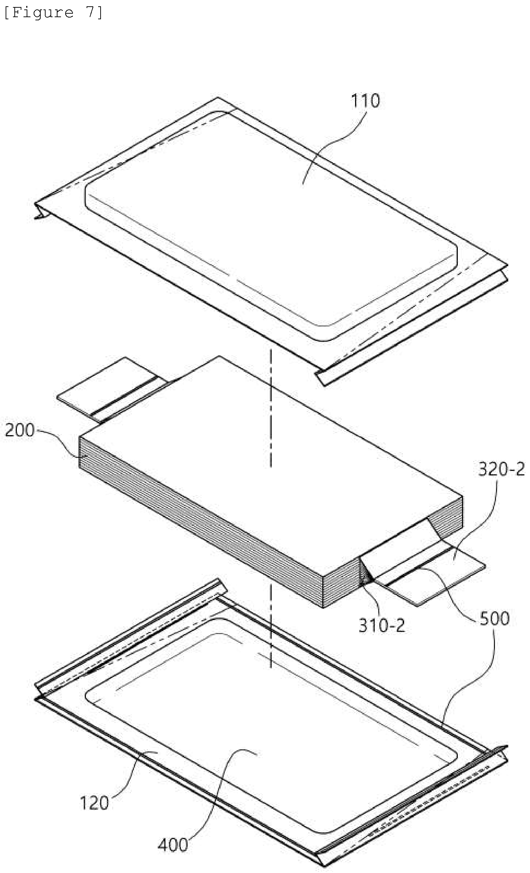

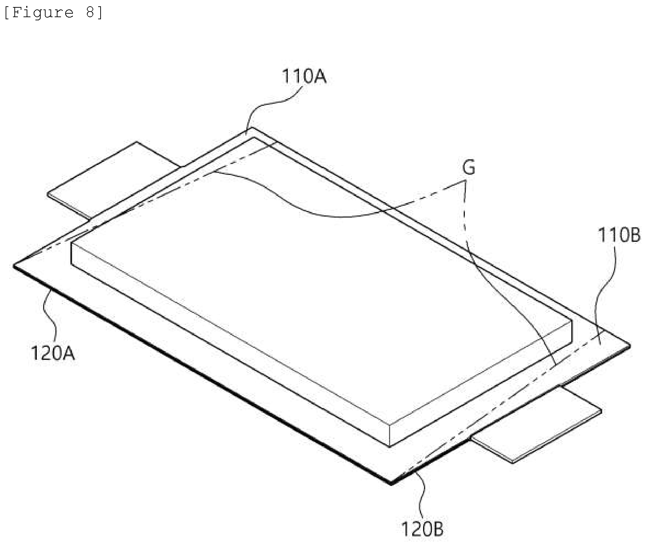

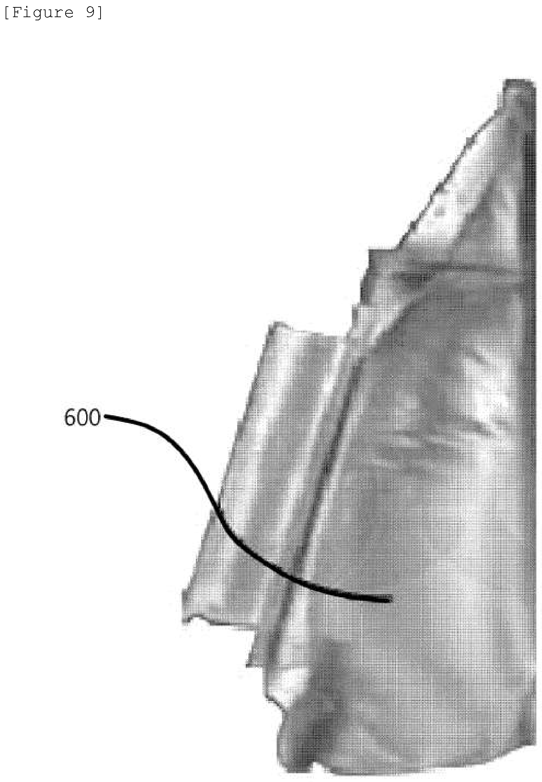

FIG. 7 is an exploded perspective view of a secondary battery according to another embodiment of the present invention, FIG. 8 is a perspective view of a secondary battery in an initial state according to another embodiment of the present invention, and FIG. 9 is a partial image of a secondary battery according to another embodiment of the present invention, which corresponds to an enlarged view of area A of FIG. 1.

Referring to FIGS. 7 and 8, the first case 110 and the second case 120 may include at least one of a first folded regions 110A, 120A and a second folded regions 110B, 120B.

According to the embodiment, the first folded region 110A, 120A may be formed at one end of the first case 110and the second case 120, and the second folded regions110B, 120B may be formed at the other end of the first case 110 and the second case 120.

One of the first folded regions 110A, 120A and the second folded regions 110B, 120B may be provided in an asymmetrical shape. More specifically, in the first folded regions 110A, 120A and the second folded regions 110B, 120B, one of the regions facing each other may be provided with a relatively large area among the regions facing each other. For example, the first folded regions 110A, 120A and the second folded regions 110B, 120B may be provided in a triangular shape.

In addition, the first folded regions 110A, 120A and the second folded regions 110B, 120B may be provided in a folded and recessed state within the receiving region 400 along the guide line (G) respectively, in an initial state of the secondary battery. Here, the initial state may be defined as a state before gas is generated inside the battery case 100.

Meanwhile, in the initial state of the secondary battery, the end edge of the first folded region 110A in the first case 110 and the end edge of the first folded region 120A in the second case 120 are each sealed with one end of the first electrode lead 320-1 by the sealing portion 500, thereby being connected to the first electrode tab 310-1 through the first electrode lead 320-1.

In addition, in the initial state of the secondary battery, the end edge of the second folding area 110B in the first case 110 and the end edge of the second folding area 120B in the second case 120 are respectively sealed with the other end of the second electrode lead 320-2, thereby being connected to the second electrode tab 310-2 through the second electrode lead 320-2.

Thereafter, when gas is generated in the secondary battery, at least one of the first folded regions 110A, 120A and the second folded regions 110B, 120B tucked into the receiving region 400 may gradually expand outward due to expansion of the gas. Accordingly, a space portion 600 may be formed in at least one of the first folded regions 110A, 120A and the second folded regions 110B, 120B.

When gas is generated inside the secondary battery, the space portion 600 may be gradually expanded outwardly due to the volume density of the gas by injection of the gas into at least one of the first folded regions 110A, 120A and the second folded regions 110B, 120B recessed inside the receiving region 400.

Here, if the gas expansion density inside the battery case 100 exceeds a predetermined first threshold level, the sealing portion 500 may be broken. Accordingly, at least one of the first folded regions 110A, 120A and the second folded regions 110B, 120B that were inserted into the receiving region400 may be unfolded as shown in FIG. 9. Here, the predetermined first threshold level may be a gas expansion density that takes into account the expansion force of the space portion 600 and the adhesive force of the sealing portion 500.

Thereafter, as shown in FIG. 5, if gas is continuously generated inside the secondary battery, at least one of the first folded regions 110A, 120A and the second folded regions 110B, 120B may be continuously expanded by the gas.

Here, the gas density may be relatively concentrated on the first space portion 600A on the first side part of the space portion 600 compared to the second space portion 600B on the second side part. Accordingly, an external force F may be generated on the first space portion 600A on the first side part. Accordingly, at least one electrode tab 310-1, 310-2 fixed together by sealing may also be subject to a rotational force F.

In addition, the gas expansion density of the first space portion 600A on the first side part may reach a predetermined second threshold level earlier than that of the second space portion 600B on the second side part.

Here, when the gas expansion density exceeds the predetermined second threshold level, at least one of the first electrode tab 310-1 and the second electrode tab 310-2 may be sequentially fractured and broken from the first side part 600A toward the second side part 600B. Here, the predetermined second threshold level may be a gas density immediately before a vent occurs. For example, the predefined second threshold level may be calculated in advance by considering the expansion force of the space portion 600, the tension and bonding force of the electrode tabs 310-1, 310-2 and the electrode leads 320-1, 320-2, etc.

In more detail according to one embodiment, when the space portion 600 is located at one end of the battery case 100, a rotational force F may be generated in a counterclockwise direction at the first space portion 600A on the first side part of the one end. Accordingly, as the first electrode lead 320-1 moves by receiving the rotational force F in the counterclockwise direction, a rotational force F may be applied in the same direction (counterclockwise direction) to the first electrode tab 310-1 that is bonded to the first electrode lead 320-1.

Here, since the first electrode tab 310-1 is provided as a metal thin film of micrometers, when the gas expansion density exceeds a predetermined threshold level, a force greater than the tension of the first electrode tab 310-1may be sequentially applied from the first side part 600A of the first electrode tab 310-1 to the second side part 600B. Accordingly, the first electrode tab 310-1 can be sequentially (C1 → C2) broken in the first diagonal direction (L).

Meanwhile, according to another embodiment, when the space portion 600 is located at the other end of the battery case 100, a clockwise rotational force F may be generated at the first space portion 600A on the first side part of the other end. Accordingly, as the second electrode lead 320-2 moves in a clockwise direction while receiving a rotational force F, a rotational force F may be applied in the same direction (clockwise) to the second electrode tab 310-2 connected to the second electrode lead 320-2.

Here, since the second electrode tab 310-2 is provided as a micrometer metal thin film, when the gas expansion density exceeds a predetermined threshold level, a force greater than the tension of the second electrode tab 310-2 may be sequentially applied from the first side part 600A of the second electrode tab 310-2 toward the second side part 600B. Accordingly, the second electrode tab 310-2 may be sequentially broken in the second diagonal direction. Here, the second diagonal direction may be opposite to the direction of the first electrode tab 310-1. For example, the first diagonal line may be downward to the right, and the second diagonal line may be downward to the left.

In summary, the secondary battery according to the second embodiment of the present invention can stepwise check the level of gas generation in the secondary battery according to the first threshold level and the second threshold level by providing a battery case 100 with a foldable structure.

Meanwhile, the first electrode tab 310-1 and the second electrode tab 310-2 may have a notch formed to facilitate fracture when fractured by the space portion 600.

According to one embodiment, the first electrode tab 310-1 may include a first notch formed along the first diagonal direction (L) on the surface. Accordingly, when an external force is generated in a counterclockwise direction due to expansion of the space portion 600 due to gas generation, the first electrode tab 310-1 may be fractured in the first diagonal direction by the first notch with a small force.

In addition, according to another embodiment, the second electrode tab 310-2 may include a second notch formed along the second diagonal direction on the surface. Accordingly, when an external force is generated in a clockwise direction due to the expansion of the space portion 600 caused by gas generation, the second electrode tab 310-2 may be broken in the second diagonal direction by the second notch even with a small force.

The secondary battery according to the present invention has been described above. The secondary battery according to the present invention provides an asymmetrical space formed by gas expansion at both ends of the electric case when gas is generated due to a side reaction inside the battery, so that the electrode tabs connected to one area of the space are broken in diagonal directions by rotational force applied to the space portion, thereby preventing ignition or explosion inside the battery caused by gas.

The secondary battery according to various embodiments of the present invention described above exhibits high structural stability and enables weight reduction since both ends have a square cell structure and the central portion has a pouch-shaped cell structure.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A secondary battery comprising:
an electrode assembly;
an electrode tab electrically connected to at least one electrode in the electrode assembly;
a battery case including a receiving region configured to receive the electrode assembly and the electrode tab; and
an electrode lead that is joined to the electrode tab and protrudes outside the battery case,
wherein the battery case further includes a space portion that is joined to at least a part of the electrode lead and that expands by gas which is generated inside the battery case, and
wherein, upon the space portion expanding by the gas, the electrode tab becomes fractured by a physical force transmitted through the electrode lead.

2. The secondary battery of claim 1, wherein volume of the space portion is provided in an asymmetrical shape that decreases as it goes down from a first side part to a second side part.

3. The secondary battery of claim 2, wherein, when the space portion is expanded by gas, gas expansion density is concentrated on the first side part of the space portion so that an external force is sequentially applied from one side of the electrode tab, which is close to the first side part of the space portion, to the other side, resulting in the electrode tab fractured in a diagonal direction.

4. The secondary battery of claim 1, wherein the electrode tab includes a notch that guides fracture.

5. The secondary battery of claim 2, wherein the battery case includes a folded region that is formed at one or more ends of the battery case and is provided in an asymmetrical shape with an area that decreases as it goes down from a first side part to a second side part, and
wherein the folded region is provided such that at least a part of the folded region is folded and recessed into the receiving region in the initial state.

6. The secondary battery of claim 5, wherein the at least a part of the folded region that has been folded and recessed unfolds outward when gas equal to or greater than a predetermined first threshold level is generated inside the battery case.

7. The secondary battery of claim 6, wherein, when gas greater than a second threshold level which is equal to or greater than the first threshold level is generated inside the battery case, the gas expansion density is concentrated on the first side part of the space portion so that external force is sequentially applied from one side of the electrode tab, which is close to the first side part of the space portion, to the other side, resulting in the electrode tab fractured in a diagonal direction.

8. The secondary battery of claim 1, wherein the battery case includes:
a first case positioned below the electrode assembly; and
a second case positioned above the electrode assembly and facing the first case.

9. The secondary battery of claim 8, wherein the electrode lead, which is connected to the electrode tab, is joined and sealed with ends of the first case and the second case.

10. The secondary battery of claim 8, wherein the first case and the second case include:
a sealing portion that seals outer peripheral surfaces of the first case and the second case.

11. The secondary battery of claim 10, wherein the sealing portion is configured to seal and bond at least one area of the first case, the second case, and the electrode lead, by at least one of heat and pressure.

12. The secondary battery of claim 1, wherein the battery case is provided as a pouch type case.
